# FASCICULE DE BREVET EUROPEEN

(11) **EP 0 907 520 B1**
(45) Date de publication et mention de la délivrance du brevet: **29.08.2001**
(21) Numéro de dépôt: 97930609.9
(22) Date de dépôt: 27.06.1997
(51) Int. Cl.: B60G 3/26

(54) **TRAIN ARRIERE POUR VEHICULE AUTOMOBILE**
HINTERACHSE FÜR MOTORFAHRZEUG
REAR AXLE ASSEMBLY FOR MOTOR VEHICLE

(30) Priorité: 28.06.1996 FR 9608066
(43) Date de publication de la demande: 14.04.1999
(73) Titulaire: RENAULT, 92109 Boulogne-Billancourt (FR)
(72) Inventeur: VENEAU, Jean, F-92500 Rueil Malmaison (FR)
(86) Numéro de dépôt international: FR9701156
(87) Numéro de publication internationale: WO9800300

(56) Documents cités:
- EP-A- 0 323 815
- EP-A- 0 588 694
- DE-A- 3 047 004
- PATENT ABSTRACTS OF JAPAN vol. 018, no. 055 (M-1550), 28 janvier 1994 & JP 05 278421 A (FUJI HEAVY IND LTD), 26 octobre 1993,
- PATENT ABSTRACTS OF JAPAN vol. 009, no. 158 (M-393), 3 juillet 1985 & JP 60 033112 A (MAZDA KK), 20 février 1985,
- KOSAK W ET AL: "DIE NEUE ZENTRAL-LENKER-HINTERACHSE DER BMW 3ER-BAUREIHE" ATZ AUTOMOBILTECHNISCHE ZEITSCHRIFT, vol. 93, no. 5, 1 mai 1991, pages 274-277, 280, XP000243772 cité dans la demande
- PATENT ABSTRACTS OF JAPAN vol. 013, no. 060 (M-796), 10 février 1989 & JP 63 265710 A (MAZDA MOTOR CORP), 2 novembre 1988,
- MATSCHINSKY W ET AL: "DIE INTEGRAL-HINTERACHSE FUER DAS COUPE BMW 850I" ATZ AUTOMOBILTECHNISCHE ZEITSCHRIFT, vol. 92, no. 10, 1 octobre 1990, pages 554-557, 560, 561, XP000174824
- PATENT ABSTRACTS OF JAPAN vol. 017, no. 139 (M-1385), 22 mars 1993 & JP 04 317809 A (HONDA MOTOR CO LTD), 9 novembre 1992,
- PATENT ABSTRACTS OF JAPAN vol. 017, no. 106 (M-1375), 4 mars 1993 & JP 04 297311 A (YAMAHA MOTOR CO LTD), 21 octobre 1992,

## Description

La présente invention concerne un train arrière à roues indépendantes pour véhicule automobile.

La publication ATZ 83(1991) 5, pages 274-280, décrit un train arrière comprenant un bras longitudinal dont l'extrémité antérieure est articulée sur le châssis et dont l'extrémité postérieure porte la fusée de roue. L'extrémité postérieure du bras longitudinal est reliée au châssis du véhciule par deux bras transversaux convergents.

La droite passant par le point de convergence des bras transversaux, d'une part, et le point avant d'articulation du bras longitudinal sur le châssis constitue l'axe de pivotement instantané de la roue par rapport au châssis. Cette charnière virtuelle détermine complètement les variations de pincement et de carrossage de la roue lors de son débattement. Les angles d'ouverture/fermeture et de carrossage de la roue, notamment, sont déterminés par la position relative du point de convergence des bras transversaux et du point d'articulation du bras longitudinal sur le châssis.

Il en résulte que toute modification de la position relative de ces points, qui ne peut d'ailleurs s'effectuer que dans un domaine limité si l'on souhaite conserver au véhicule un comportement dynamique acceptable, entraîne une variation conjointe de ces angles.

La technique proposée dans ce document présente l'inconvénient que les angles de carrossage et de pince ne peuvent être réglés indépendamment l'un de l'autre.

Une telle disposition limite donc les possibilités d'évolution et de modification des caractéristiques de la suspension.

Un tel type de train nécessite en outre une conformation de caisse spécifique, ce qui rend très difficile son implantation sur un véhicule qui n'a pas été étudié pour le recevoir dès l'origine.

Le document JP-A-5 278421 décrit un train arrière à roues indépendantes pour véhicule automobile, du type comprenant un porte-fusée de roue relié à la structure du véhicule par un bras longitudinal et une bielle supérieure de carrossage, un amortisseur et un ressort de suspension où la partie postérieure du bras longitudinal est relié à la structure du véhicule par une bielle inférieure de carrossage.

Le document JP-A-60 033112 décrit une structure particulière de train arrière dans laquelle une extension est fixée sur le bras longitudinal, et une biellette est reliée à l'extension et à la structure du véhicule.

Néanmoins, la structure de la suspension décrite dans le document JP-A-60 033112 est tout à fait différente de celle décrite dans le document JP-A-5 278421, si bien que l'inclusion de la caractéristique décrite dans le document JP-A-60 033112 présente de nombreuses difficultés.

La présente invention a pour objet une structure particulière de train arrière de véhicule automobile, qui pallie les inconvénients connus de l'état de la technique.

L'invention propose un train arrière dont l'angle de pince et de carrossage peuvent être réglés sensiblement indépendamment l'un de l'autre.

En particulier, toute variation, tout du moins dans un domaine déterminé, de l'un des angles n'entraîne qu'une variation faible de l'autre, de telle sorte que l'on puisse considérer ces variations comme découplées.

Un autre avantage du train selon l'invention est qu'il est aisément adaptable sur des châssis différents au prix de modifications mineures et peut donc équiper tout ou partie d'une gamme d'un constructeur, d'où une économie d'échelle conséquente.

On comprendra mieux les buts, aspects et caractéristiques de la présente invention, d'après la description donnée ci-après d'un mode de réalisation de l'invention, présenté à titre d'exemple non limitatif, en se référant aux dessins annexés, dans lesquels :
- la figure 1 est une représentation schématique d'un demi-train selon l'invention,
- la figure 2 est une vue en perspective d'un mode de réalisation d'un demi-train selon l'invention,
- la figure 3 est une vue de l'arrière du demi-train de la figure 2,
- la figure 4 est une vue de côté du demi-train de la figure 2.
- les figures 5 et 6 représentent respectivement les courbes d'évolution CC1, CC2 de l'angle de carrossage et les courbes d'évolution CP1, CP2 de l'angle de pince pour deux positionnements particuliers des éléments constitutifs du train arrière selon l'invention.

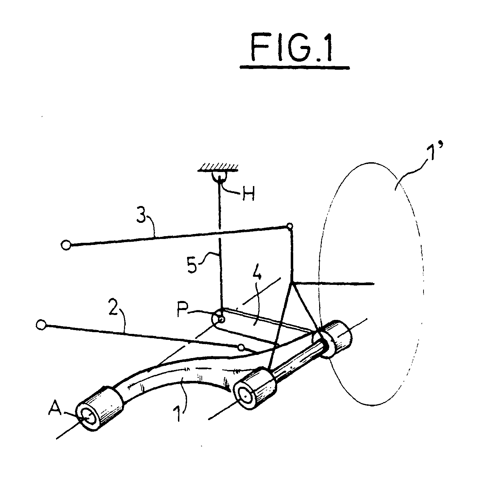

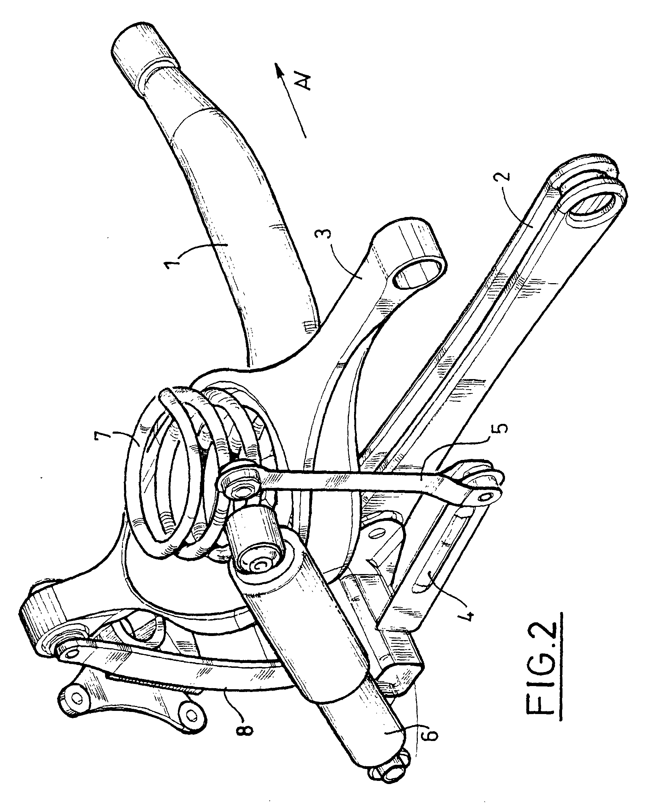

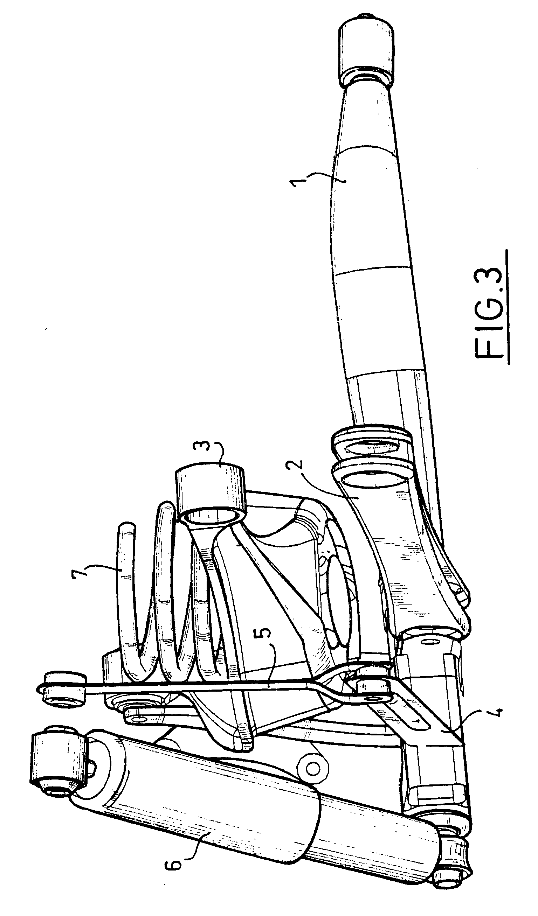

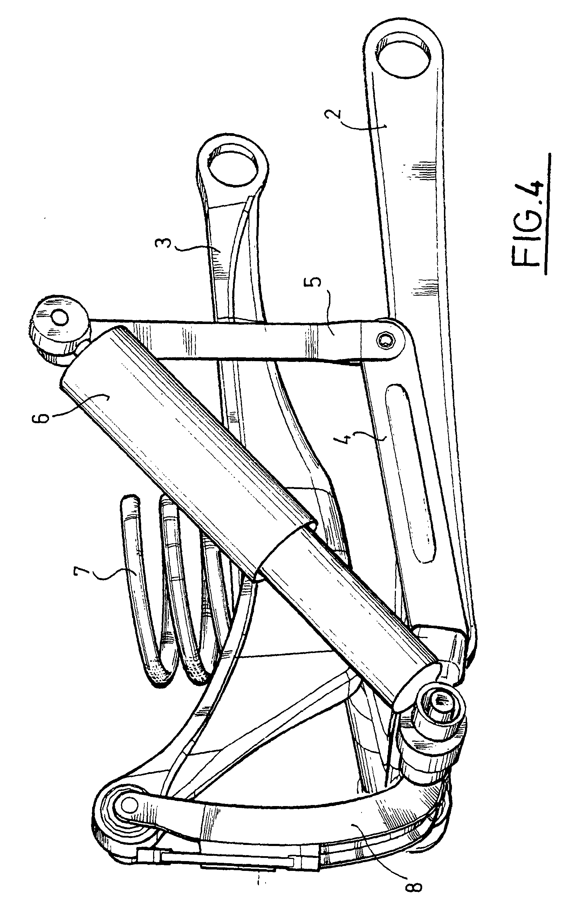

Tel qu'illustré sur les figures 1 à 4, le train arrière selon l'invention comprend un amortisseur 6 hydraulique, un ressort 7 hélicoïdal de suspension qui peut être également un ressort pneumatique, une bielle inférieure 2 de carrossage, un bras longitudinal 1, une bielle supérieure 3 de carrossage.

Une lame transversale 4 est fixée par l'une de ses extrémités sur le bras longitudinal 1 et coopère par son autre extrémité avec une biellette 5 sensiblement verticale. Les extrémités inférieure et supérieure de la biellette 5 sont respectivement articulées sur la lame 4 et le châssis. De manière préférentielle, les articulations correspondantes sont de type pivot.

L'amortisseur 6, les bielles inférieure 2 et supérieure 3 de carrossage ainsi que le bras longitudinal 1 sont montés en articulation entre un porte-fusée 8 supportant la roue arrière gauche 1' du véhicule et le châssis du véhicule. La flèche indique le sens de déplacement du véhicule en marche avant. De manière préférentielle, l'extrémité postérieure du bras longitudinal 1 présente une articulation de révolution autour d'un axe horizontal solidaire du porte-fusée 8.

Le train arrière selon l'invention présente quatre points de fixation par rapport au châssis. Ces points de fixation sont constitués par l'extrémité avant du bras longitudinal 1, une extrémité de la bielle inférieure 2 de carrossage, une extrémité de la bielle supérieure 3 de carrossage et l'extrémité supérieure de la biellette 5.

Le bras longitudinal 1 présente son extrémité avant montée de façon articulée sur le châssis du véhicule. Le montage peut être effectué au moyen d'un palier élastique 9. La partie d'extrémité arrière du bras longitudinal 1 pivote en deux points et autour d'un axe sensiblement horizontal et incliné par rapport à la direction longitudinale solidarisé au porte-fusée 8.

Le centre de la roue 1' est situé sur l'axe de fusée arrière ou axe du train arrière. Cet axe est horizontal et transversal au véhicule.

L'extrémité avant du bras inférieur longitudinal 1 est située plus à l'intérieur du véhicule dans le sens transversal par rapport à son extrémité arrière et présente une partie coudée.

L'amortisseur 6, incliné dans un plan sensiblement tranversal, a son extrémité supérieure articulée sur le châssis et son extrémité inférieure articulée sur le porte-fusée 8.

Les bielles 2 et 3 de carrossage s'articulent sur le châssis et sur le porte-fusée 8 afin d'ajuster l'inclinaison du plan de roue par rapport à la verticale.

Cette inclinaison du plan de roue 1' peut être réglée en modifiant les dispositions relatives des bielles inférieure 2 et supérieure 3 l'une par rapport à l'autre, ce qui peut être réalisée, soit en modifiant leur longueur respective, soit la position de leur point d'articulation respectif sur le châssis.

Ainsi un déplacement vertical vers le haut du point d'articulation de la bielle supérieure 3 sur le porte-fusée 8 par rapport à l'axe du train diminue la valeur de l'angle de carrossage de la roue 1'.

La bielle supérieure 3 est porteuse du ressort hélicoïdal 7 ou pneumatique de suspension. A cet effet, la bielle 3 est pourvue d'un évidement cylindrique qui reçoit l'extrémité inférieure du ressort 7, l'extrémité supérieure du ressort 7 étant en appui sur le châssis du véhicule. La bielle supérieure 3 porteuse est disposée dans un plan sensiblement horizontal et s'articule d'une part sur le châssis et d'autre part sur le porte-fusée 8.

La biellette 5 et la lame 4 ne sont que faiblement sollicitées, l'essentiel de la composante longitudinale des efforts appliqués à la roue 1' étant reprise par l'articulation avant 9 du bras longitudinal 1 sur le châssis, la composante transversale desdits efforts étant, quant à elle reprise au niveau des articulations des bielles 2 et 3 sur le châssis et de l'articulation avant 9 du bras longitudinal 1 précédemment citée.

Le train selon l'invention permet de régler indépendamment les variations de pince et de carrossage du plan de roue 1' lors du débattement de cette dernière au cours du roulage, ces dernières étant commandées par un fonctionnement cinématique faisant intervenir des éléments différents du train arrière.

En effet, la loi de variation de pince est déterminée par l'obliquité de l'axe de pivotement virtuel de la roue par rapport au châssis. Cette charnière virtuelle est constituée par la droite passant par le point A d'articulation du bras longitudinal 1 sur le châssis, d'une part, et par le centre P de l'articulation commune à la biellette 5 et à la lame transversale 4, d'autre part.

Les axes de liaison de la biellette 5 sur la structure du véhicule et sur la lame 4 s'étendent sensiblement longitudinalement.

Si la position du point A d'articulation antérieur du bras longitudinal 1 reste fixe, la position du centre P de l'articulation commune à la biellette 5 et à la lame 4 est par contre facilement modifiable soit en modifiant la longueur de la biellette 5 et de la lame 4, soit en prévoyant différents trous de réglage disposés sur tout ou partie de la longueur de la lame 4, l'axe de l'articulation commune à la biellette 5 et à la lame 4 pouvant être monté dans l'un ou l'autre de ces trous, ce qui permet de modifier facilement la position du point P.

La position de ce point P varie très peu par rapport à un point lié au châssis au cours du roulage du véhicule.

L'extrémité inférieure de la biellette 5 est conformée en une fourche à deux branches entre lesquelles vient se loger l'extrémité correspondante de la lame 4.

Les deux branches de la fourche sont percées de trous de réception des extrémités d'un axe porté par l'extrémité de la lame 4.

L'extrémité supérieure de l'amortisseur 6 est montée à pivotement sur la structure du véhicule autour d'un axe coaxial à l'axe de montage de la biellette 5 sur la structure du véhicule.

La loi de variation du carrossage lors du débattement de la roue en cours de roulage est, quant à elle, déterminée uniquement par le positionnement relatif des bielles inférieure et supérieure l'une par rapport à l'autre qui détermine un point de convergence ainsi que leurs longueurs respectives.

Les variations respectives du carrossage et de la pince sont donc cinématiquement indépendantes l'une de l'autre et toute modification de l'une des lois n'aura pas d'influence sur l'autre loi de variation.

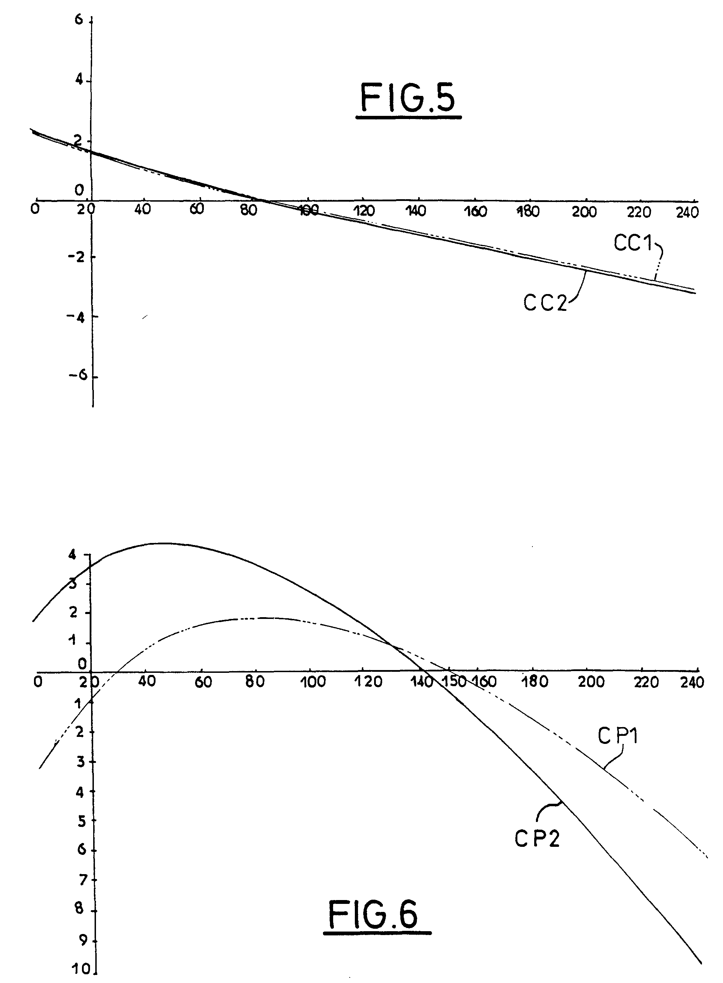

Ce découplage des lois de variation entre elles est illustré par les figures 5 et 6. La figure 6 représente les courbes représentatives de la variation de pince pour un débattement donné de la roue correspondant à deux positionnements de l'axe virtuel de pivotement de la roue par rapport au châssis. La première courbe notée CP1 correspond à un premier positionnement de cette charnière, et la seconde notée CP2 à un deuxième positionnement défini par rapport au premier par un déplacement vers le haut du point d'articulation du bras de 2 mm.

La figure 5 représente la variation de carrossage CC1, CC2 correspondant aux deux positionnements particuliers de la charnière virtuelle déterminant respectivement les lois de variation de pince CP1, CP2.

Ces figures 5 et 6 illustrent l'indépendance des lois de variation entre elles, on constate en effet la quasi superposition des courbes représentatives CC 1 et CC2.

Le train arrière selon la présente invention permet en outre de réaliser des véhicules présentant un faible porte-à-faux, et sur lequel peuvent être montées des roues de grand diamètre.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit comme décrit dans les revendications suivantes.

## Revendications

1. Train arrière à roues indépendantes pour véhicule automobile, du type comprenant un porte-fusée 8 de roue 1' relié à la structure du véhicule par un bras longitudinal 1 et une bielle supérieure 3 de carrossage, un amortisseur 6 et un ressort 7 de suspension, la partie postérieure du bras longitudinal 1 étant reliée à la structure du véhicule par une bielle inférieure 2 de carrossage, **caractérisé en ce que** la partie postérieure du bras longitudinal 1 est en outre reliée à la structure du véhicule par un ensemble composé d'une lame 4 et d'une biellette 5 mutuellement articulées, où la lame 4 est fixée sur le bras longitudinal 1 et s'étend sensiblement transversalement.

2. Train arrière selon la revendication 1, **caractérisé en ce que** la biellette 5 s'étend sensiblement verticalement.

3. Train arrière selon l'une quelconque des revendications précédentes, **caractérisé en ce que** la biellette 5 est montée à pivotement autour d'un premier et d'un deuxième axe portés respectivement par la structure du véhicule et par l'extrémité de la lame 4 opposée au bras longitudinal 1.

4. Train arrière selon l'une quelconque des revendications précédentes, **caractérisé en ce que** les axes de liaison de la biellette 5 sur la structure du véhicule et sur la lame 4 s'étendent sensiblement longitudinalement.

5. Train arrière selon l'une quelconque des revendications précédentes, **caractérisé en ce que** l'extrémité inférieure de la biellette 5 est conformée en une fourche à deux branches entre lesquelles vient se loger l'extrémité correspondante de la lame 4.

6. Train arrière selon la revendication 5, **caractérisé en ce que** les deux branches de la fourche sont percées de trous de réception des extrémités d'un axe porté par l'extrémité de la lame 4.

7. Train arrière selon l'une quelconque des revendications précédentes, **caractérisé en ce que** l'extrémité supérieure de l'amortisseur 6 est montée à pivotement sur la structure du véhicule autour d'un axe coaxial à l'axe de montage de la biellette 5 sur la structure du véhicule.

8. Train arrière selon l'une quelconque des revendications précédentes, **caractérisé en ce que** le ressort 7 de suspension est monté entre la bielle supérieure 3 de carrossage et la structure du véhicule.

## Patentansprüche

1. Hinterachsaggregat mit unabhängigen Rädern für ein Automobil, umfassend einen Achsschenkel (8) eines Rades (1'), der mit der Struktur des Fahrzeugs durch einen Längsarm (1) und eine obere Sturzstange (3), einen Stoßdämpfer (6) und eine Aufhängungsfeder (7) verbunden ist, wobei der hintere Teil des Längsarms (1) mit der Struktur des Fahrzeugs durch eine untere Sturzstange (2), verbunden ist, **dadurch gekennzeichnet**, dass der hintere Teil des Längsarms (1) darüber hinaus mit der Struktur des Fahrzeugs durch eine Einheit verbunden ist, die sich zusammensetzt aus einem Blatt (4) und einem Schwingarm (5), die gelenkig miteinander verbunden sind, wobei das Blatt 4 am Längsarm (1) befestigt ist und sich annähernd in Querrichtung erstreckt.

2. Hinterachsaggregat nach Anspruch 1, **dadurch gekennzeichnet**, dass sich der Schwingarm (5) annähernd vertikal erstreckt.

3. Hinterachsaggregat nach einem der vorhergehenden Ansprüche, **dadurch gekennzeichnet**, dass der Schwingarm (5) um eine erste und eine zweite Achse schwenkbar montiert ist, die von der Struktur des Fahrzeugs bzw. von dem Ende des Blattes (4), das dem Längsarm (1) entgegengesetzt ist, getragen werden.

4. Hinterachsaggregat nach einem der vorhergehenden Ansprüche, **dadurch gekennzeichnet**, dass die sich Achsen der Verbindung des Schwingarms (5) mit der Struktur des Fahrzeugs und mit dem Blatt 4 annähernd in Längsrichtung erstrecken.

5. Hinterachsaggregat nach einem der vorhergehenden Ansprüche, **dadurch gekennzeichnet**, dass das untere Ende des Schwingarms die Form einer Gabel mit zwei Zweigen aufweist, zwischen denen das entsprechende Ende des Blattes (4) aufgenommen wird.

6. Hinterachsaggregat nach Anspruch 5, **dadurch gekennzeichnet**, dass in die zwei Zweige der Gabel Löcher zur Aufnahme der Enden einer Achse gebohrt sind, die vom Ende des Blattes (4) getragen wird.

7. Hinterachsaggregat nach einem der vorhergehenden Ansprüche, **dadurch gekennzeichnet**, dass das obere Ende des Stoßdämpfers (6) an der Struktur des Fahrzeugs schwenkbar um eine Achse montiert ist, die koaxial mit der Achse der Montage des Schwingarms (5) an der Struktur des Fahrzeugs ist.

8. Hinterachsaggregat nach einem der vorhergehenden Ansprüche, **dadurch gekennzeichnet**, dass die Aufhängungsfeder (7) zwischen der oberen Sturzstange (3) und der Struktur des Fahrzeugs montiert ist.

## Claims

1. Rear axle assembly with independent wheels for an automotive vehicle, of the type comprising a hub carrier 8 for a wheel 1' connected to the vehicle structure by a longitudinal arm 1 and an upper camber adjusting rod 3, a shock absorber 6 and a suspension spring 7, the posterior part of the longitudinal arm 1 being connected to the vehicle structure by a lower camber adjusting rod 2, **characterised in that** the posterior part of the longitudinal arm 1 is moreover connected to the vehicle structure by an assembly composed of a mutually articulated blade 4 and tie rod 5, where the blade 4 is fixed onto the longitudinal arm 1 and extends substantially transversely.

2. Rear axle assembly according to claim 1, **characterised in that** the tie rod 5 extends substantially vertically.

3. Rear axle assembly according to any one of the preceding claims, **characterised in that** the tie rod 5 is mounted in a pivoting manner about a first and a second axle respectively carried by the vehicle structure and by the extremity of the blade 4 opposite to the longitudinal arm 1.

4. Rear axle assembly according to any one of the preceding claims, **characterised in that** the axes of connection of the tie rod 5 onto the vehicle structure and onto the blade 4 extend substantially longitudinally.

5. Rear axle assembly according to any one of the preceding claims, **characterised in that** the lower extremity of the tie rod 5 is configured as a fork with two prongs, between which the corresponding extremity of the blade 4 comes to be accommodated.

6. Rear axle assembly according to claim 5, **characterised in that** the two prongs of the fork are pierced by receiving apertures for the extremities of an axle carried by the extremity of the blade 4.

7. Rear axle assembly according to any one of the preceding claims, **characterised in that** the upper extremity of the shock absorber 6 is mounted in a pivoting manner on the vehicle structure about an axle coaxial to the axis of mounting of the tie rod 5 on the vehicle structure.

8. Rear axle assembly according to any one of the preceding claims, **characterised in that** the suspension spring 7 is mounted between the upper camber adjusting rod 3 and the vehicle structure.
